# FASCICULE DE BREVET EUROPEEN

(11) **EP 2 683 897 B1**
(45) Date de publication et mention de la délivrance du brevet: **11.10.2017**
(21) Numéro de dépôt: 12714753.6
(22) Date de dépôt: 08.03.2012
(51) Int. Cl.: E05F 1/10, E02D 29/14, E06B 5/01

(54) **DISPOSITIF D'ASSISTANCE À L'OUVERTURE D'UN ÉLÉMENT DE RECOUVREMENT MONTÉ PIVOTANT RELATIVEMENT À UN BORD D'UN CADRE**
VORRICHTUNG ZUR UNTERSTÜTZUNG DES ÖFFNENS EINES RELATIF ZUM RAND EINES RAHMENS SCHWENKBAR MONTIERTEN VERSCHLUSSELEMENTES
DEVICE FOR ASSISTING THE OPENING OF A COVER ELEMENT PIVOTALY MOUNTED ON A FRAME EDGE

(30) Priorité: 09.03.2011 FR 1151944
(43) Date de publication de la demande: 15.01.2014
(73) Titulaire: EJ EMEA, 60149 Saint-Crépin-Ibouvillers (FR)
(72) Inventeur: PIERMEE, Alexandre, F-08000 Prix Les Mezieres (FR)
(74) Mandataire: Santarelli
(86) Numéro de dépôt international: PCT/FR2012/050490
(87) Numéro de publication internationale: WO 2012/120239

(56) Documents cités:
- DE-A1- 2 829 145
- DE-A1- 3 415 343
- FR-A1- 2 812 008
- US-A- 5 205 073

## Description

La présente invention concerne un équipement de voirie comprenant un dispositif d'assistance à l'ouverture d'un élément de recouvrement, tel qu'une trappe, un tampon ou un couvercle, monté pivotant relativement à un bord d'un cadre entre une position rabattue de fermeture du cadre et une position dressée d'ouverture de ce cadre.

Elle s'applique en particulier, mais de manière non limitative, à un équipement de voirie dont l'élément de recouvrement occupant sa position dressée libère l'ouverture du cadre pour accéder à une cheminée de visite ou d'inspection d'un réseau souterrain.

On connait de tels dispositifs d'assistance qui comprennent des vérins qui sont chacun interposés entre l'élément de recouvrement et le bord du cadre d'un dispositif de voirie.

Chaque vérin d'assistance peut être du type à gaz ou du type comprenant deux ressorts logés concentriquement l'un l'intérieur de l'autre dans le cylindre du vérin en étant montés précontraints à l'état libre entre une paroi d'extrémité du cylindre et un piston monté à coulissement guidé dans le cylindre et solidaire de l'extrémité de la tige de vérin.

Si de tels vérins à gaz ou à ressorts donnent satisfaction pour assister l'opérateur à l'ouverture de l'élément de recouvrement à partir de sa position de fermeture du cadre, ils sont relativement coûteux et d'une structure extrêmement complexe surtout en ce qui concerne les vérins à ressorts. En outre, le vérin à ressorts a également pour inconvénient de ne pas procurer une grande amplitude d'assistance lors du pivotement de l'élément de recouvrement de sa position de fermeture à sa position d'ouverture du cadre.

Le document DE 34 15 343 divulgue un dispositif d'assistance à l'ouverture d'un volet pivotant d'un meuble et qui comprend un vérin à ressort interposé entre le volet et un encadrement du meuble. Ce vérin comporte une tige de guidage pouvant se déplacer dans le corps du vérin et un ressort de compression logé dans le corps du vérin en appui entre une extrémité de ce corps et une collerette interne de la tige du vérin qui est reliée articulée au volet par l'intermédiaire d'un bras coudé.

Ce document antérieur ne concerne pas un équipement de voirie et le vérin à ressort en lui-même n'offre pas une grande amplitude d'assistance à l'ouverture du volet du meuble, assistance qui doit être complétée par le bras coudé. US 5 205 073 divulgue un équipement de voirie selon le préambule de la revendication 1. La présente invention a pour but de palier les inconvénients ci-dessus des dispositifs d'assistance connus.

A cet effet, selon l'invention, l'équipement de voirie comprenant un cadre destiné à être solidaire du sol ou d'une chaussée et un élément de recouvrement, tel qu'une trappe, un tampon ou un couvercle, monté pivotant relativement à un bord du cadre entre une position rabattue de fermeture du cadre et une position dressée d'ouverture de ce cadre, et un dispositif d'assistance à l'ouverture de l'élément de recouvrement et qui comprend au moins un vérin à ressort relié de manière articulée par ses extrémités respectivement à l'élément de recouvrement et au bord du cadre, le vérin comprenant un fourreau dont une paroi d'extrémité comporte une chape externe reliée de manière articulée à l'élément de recouvrement ou au bord du cadre, une tige de guidage logée dans le fourreau et reliée à son extrémité opposée à la paroi d'extrémité du fourreau au bord du cadre ou à l'élément de recouvrement par une chape d'articulation, un ressort logé dans le fourreau en entourant la tige de guidage et étant d'une part précontraint à l'état détendu tout le long de la tige de guidage entre la paroi d'extrémité du fourreau et la chape de la tige de guidage, dont une portion de longueur fait saillie du fourreau, lorsque l'élément de recouvrement occupe sa position dressée d'ouverture à laquelle l'élément de recouvrement est maintenu par le ressort précontraint et d'autre part comprimé dans le fourreau entre la paroi d'extrémité du fourreau et la chape de la tige de guidage lorsque l'élément de recouvrement occupe sa position rabattue de fermeture, et un moyen solidaire de l'une des extrémités de la tige de guidage pour retenir le ressort précontraint à l'état détendu, et en ce que, lors de l'ouverture assistée de l'élément de recouvrement par le vérin à ressort, le ressort comprimé se détend pour provoquer le coulissement guidé du fourreau par la tige de guidage.

De préférence, la chape d'articulation est solidaire de l'extrémité de la tige de guidage et la paroi d'extrémité du fourreau comporte un orifice de passage de la tige de guidage lors du pivotement de l'élément de recouvrement entre ses positions rabattue de fermeture et dressée d'ouverture, et en position rabattue de fermeture de l'élément de recouvrement, la tige de guidage fait saillie du fourreau au travers de cet orifice sur une portion de sa longueur tandis qu'en position dressée d'ouverture de l'élément de recouvrement, le moyen de retenue du ressort solidaire de l'extrémité de la tige de guidage est en appui sur la paroi d'extrémité du fourreau.

Avantageusement, le moyen de retenue du ressort comprend une vis, un écrou solidaire de l'extrémité de la tige de guidage et dans lequel est ancrée la vis, et une rondelle interposée entre la tête de vis et l'écrou et venant en appui sur la paroi d'extrémité du fourreau en position dressée de l'élément de recouvrement.

Avantageusement, le ressort est monté concentriquement à la tige de guidage et au fourreau en étant en contact avec la face interne périphérique du fourreau.

L'axe d'articulation de la chape du fourreau à l'élément de recouvrement et l'axe d'articulation de la chape de la tige de guidage au bord du cadre sont parallèles à l'axe d'articulation de l'élément de recouvrement, l'axe d'articulation de la chape de la tige de guidage est situé à une distance fixe en-dessous de l'axe d'articulation de l'élément de recouvrement et la distance séparant les deux axes d'articulation des deux chapes augmente au fur et à mesure que l'élément de recouvrement pivote de sa position rabattue de fermeture à sa position dressée d'ouverture.

De préférence, la chape d'articulation du fourreau est reliée articulée à l'élément de recouvrement par l'intermédiaire d'une autre chape solidaire perpendiculairement de la face interne de l'élément de recouvrement et la chape d'articulation de la tige de guidage est reliée articulée au bord du cadre par l'intermédiaire d'une autre chape solidaire perpendiculairement d'une platine elle-même solidaire du bord du cadre en s'étendant sous le cadre perpendiculairement au plan de ce dernier.

En position rabattue de fermeture de l'élément de recouvrement, la portion de longueur de la tige de guidage fait saillie du fourreau sous l'élément de recouvrement.

Avantageusement, la chape d'articulation et la paroi d'extrémité du fourreau sont réalisées en une seule pièce soudée au fourreau et la chape d'articulation de la tige de guidage est fixée par soudage à l'extrémité de celle-ci.

Le vérin à ressort s'étend sensiblement dans le plan médian du cadre perpendiculaire à ce dernier.

Le cadre est rectangulaire et l'élément de recouvrement s'inscrit dans le cadre à sa position rabattue de fermeture.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant deux modes de réalisation de l'invention et dans lesquels :
- la figure 1 est une vue en perspective d'un ensemble à élément de recouvrement, cadre de support de cet élément et vérin d'assistance suivant un mode de réalisation préféré de l'invention, l'élément de recouvrement occupant sa position dressée d'ouverture du cadre ;
- la figure 2 est une vue de côté suivant la flèche II de la figure 1 et montrant le vérin d'assistance à sa position correspondant à la position rabattue de fermeture de l'élément de recouvrement ;
- la figure 3 est une vue de côté semblable à celle de la figure 2 et représentant le vérin d'assistance à sa position correspondant à une position d'ouverture intermédiaire de l'élément de recouvrement ;
- la figure 4 est une vue en perspective agrandie de la figure 3 ;
- la figure 5 est une vue en perspective du vérin à ressort d'assistance en position assemblée, le ressort de ce vérin étant détendu ;
- la figure 6 est une vue en perspective éclatée du vérin à ressort d'assistance de la figure 5 ;
- la figure 7 est une vue de côté suivant la flèche VII de la figure 5 ;
- la figure 8 est une vue en coupe suivant la ligne VIII-VIII de la figure 7 ;
- la figure 9 est une vue de côté semblable à celle de la figure 7 et représentant le ressort du vérin d'assistance à l'état complètement comprimé ;
- la figure 10 est une vue en coupe suivant la ligne X-X de la figure 9 ; et
- la figure 11 est une vue représentant un autre mode de réalisation du vérin à ressort d'assistance de l'invention.

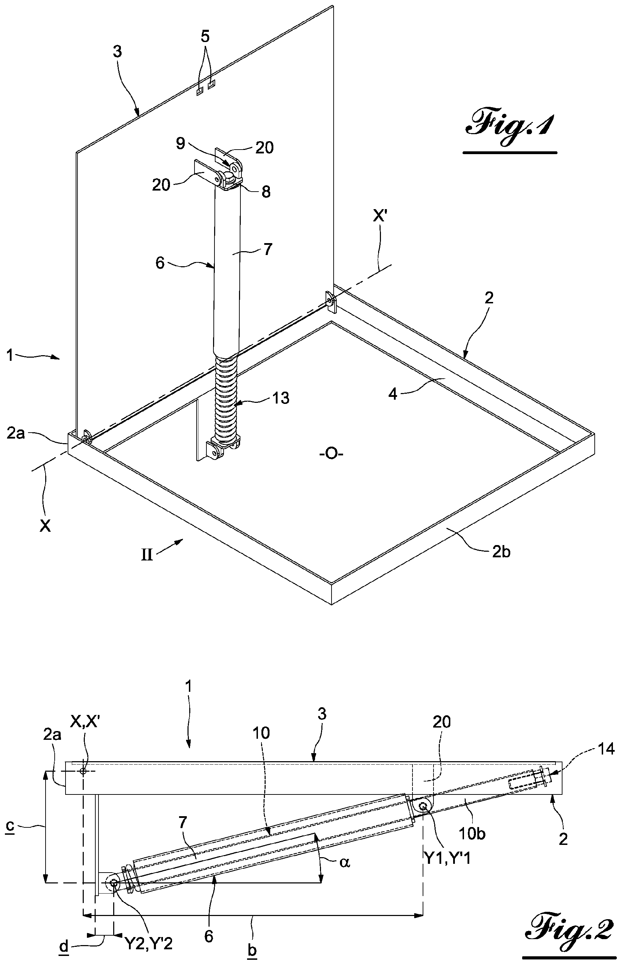

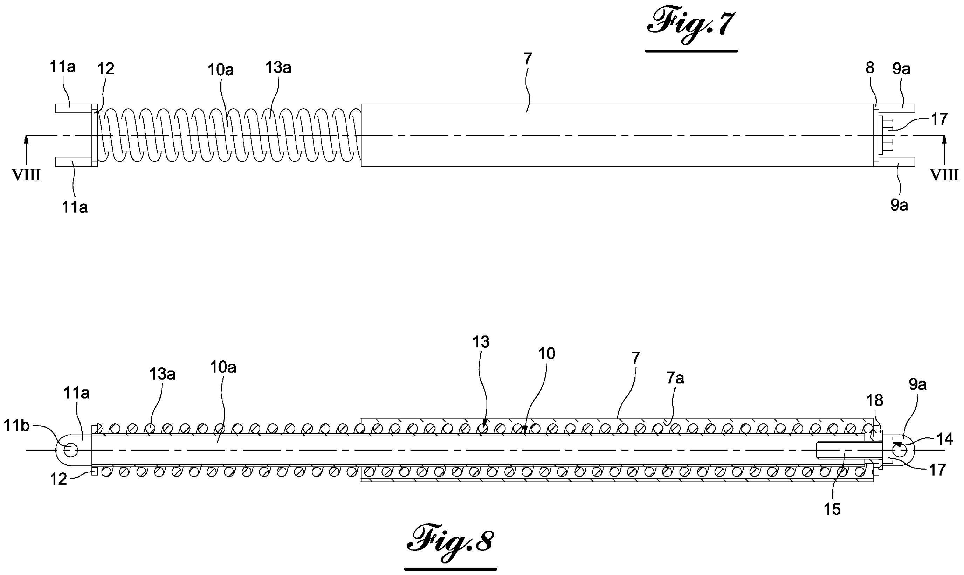

En se reportant aux figures 1 à 10, la référence 1 désigne un dispositif de voirie, qui comprend un cadre 2 solidaire du sol ou d'une chaussée et un élément de recouvrement 3, tel qu'une trappe, un tampon, un couvercle ou analogue.

Dans le cas présent, le cadre 2 est de forme rectangulaire et l'élément de recouvrement 3, également de forme rectangulaire, est monté articulé suivant l'un 2a des bords ou côtés du cadre 2 autour d'un axe de pivotement XX' pour permettre à l'élément de recouvrement 3 de pivoter entre une position rabattue de fermeture de l'ouverture 0 du cadre 2 à laquelle l'élément de recouvrement 3 s'inscrit dans le cadre 2, et une position dressée ou debout d'ouverture permettant de dégager l'ouverture 0 du cadre 2 pour accéder à une cheminée de visite ou d'inspection d'un réseau souterrain.

A titre d'exemple, l'élément de recouvrement est en forme de plaque et, comme le cadre 2, peut être réalisée en métal, tel que de l'acier.

La figure 1 représente la position dressée d'ouverture de l'élément de recouvrement 3 qui s'étend sensiblement perpendiculairement au plan du cadre 2 passant par les côtés de celui-ci et la figure 2 représente l'élément de recouvrement 3 à sa position rabattue de fermeture du cadre 2. A cette dernière position, l'élément de recouvrement 3 est en appui sur une paroi périphérique interne d'assise 4 du cadre 2.

Des moyens de verrouillage, non représentés, sont prévus pour verrouiller l'élément de recouvrement 3 au cadre 2 à sa position rabattue de fermeture dans ce cadre. Ces moyens de verrouillage peuvent comprendre un verrou à pêne solidaire de l'élément de recouvrement 3 au voisinage de son bord opposé à l'axe d'articulation XX' à proximité de l'emplacement symbolisé en figure 1 par deux perçages 5 et une gâche solidaire du bord ou côté 2b du cadre 2 opposé au côté 2a. Un tel verrou est verrouillable ou déverrouillable à l'aide d'une clé appropriée pour engager le pêne du verrou dans la gâche du cadre 2 ou le désengager de cette gâche. Les perçages 5 permettent le passage d'un crochet d'extrémité d'une barre de soulèvement de l'élément de recouvrement 3 pour l'amener à sa position d'ouverture.

Le dispositif de voirie 1 est équipé d'un vérin à ressort 6 interposé entre l'élément de recouvrement 3 et le cadre 2 et permettant d'assister un opérateur au pivotement de l'élément de recouvrement 3 de sa position rabattue de fermeture du cadre 2 à sa position dressée d'ouverture de ce cadre.

Selon le mode de réalisation préféré des figures 1 à 10, le vérin à ressort 6 comprend un fourreau cylindrique 7 dont une extrémité est fermée par une paroi 8 de laquelle font saillie extérieurement et perpendiculairement deux branches parallèles rigides 9a formant une chape 9 reliée de manière articulée à la face interne de l'élément de recouvrement 3. De préférence, la paroi 8 et les branches 9a de la chape 9 sont réalisées en une seule pièce qui est fixée à l'extrémité du fourreau 7 du vérin 6 par soudage.

Le vérin d'assistance 6 comprend en outre une tige rigide cylindrique intérieurement creuse 10 logée dans le fourreau 7 et qui comporte à son extrémité opposée à la paroi d'extrémité 8 du fourreau 7 et à l'extérieur de ce dernier une chape 11 à deux branches rigides parallèles 11a solidaires d'une plaque 12 extérieurement et perpendiculairement à celle-ci et qui est fixée, par exemple par soudage, à l'extrémité de la tige 10. La plaque 12 est disposée perpendiculairement à la tige 10.

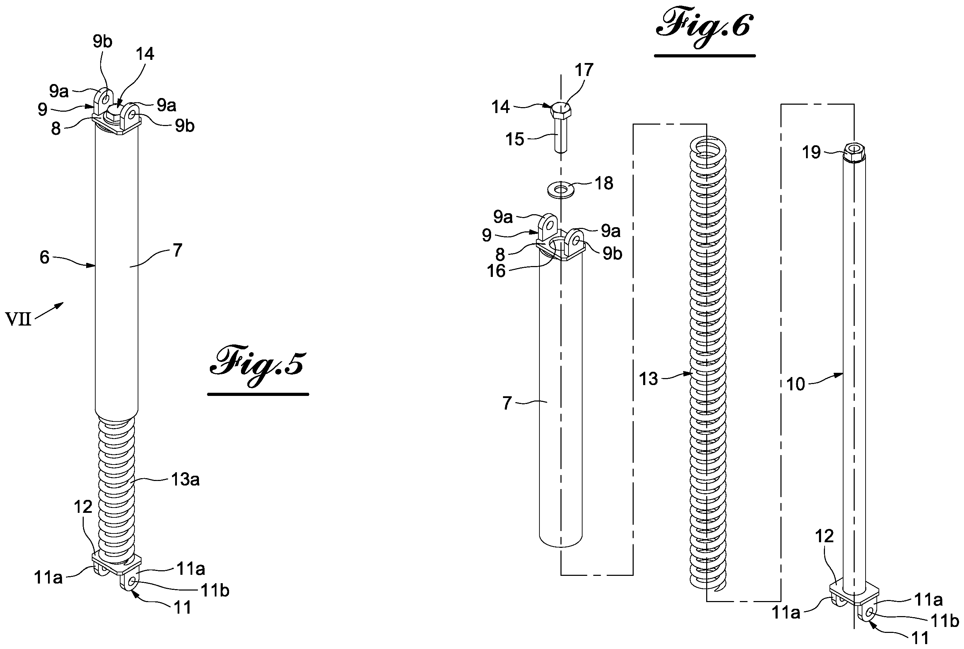

Le vérin 6 comprend également un ressort 13, du type hélicoïdal de compression, logé dans le fourreau 7 en entourant la tige 10 et étant monté précontraint à l'état détendu, non comprimé, comme représenté notamment aux figures 5, 7 et 8, entre la paroi d'extrémité 8 du fourreau 7 et la paroi 12 de la chape 11 de la tige 10. Ainsi, à l'état détendu, le ressort 13 s'étend tout le long de la tige 10 et comporte une partie externe 13a entourant la portion de tige externe correspondante 10a de la tige 10 faisant saillie du fourreau 7.

Le ressort 13 est monté concentriquement à la tige 10 et au fourreau 7 et a son pourtour externe en contact avec la face interne périphérique 7a du fourreau 7. A l'état détendu, le ressort 13 est maintenu précontraint entre la paroi d'extrémité 8 du fourreau 7 et la plaque 12 de la tige 10 par un moyen comprenant de préférence une vis 14 dont la partie filetée 15 est ancrée à l'extrémité de la tige 10 coaxialement et qui traverse un orifice 16 de la plaque 8 coaxial au fourreau 7, la tête 17 de la vis 14 étant en appui sur la paroi 8 par l'intermédiaire d'une rondelle 18.

L'extrémité de la tige 10 comporte, soudé à celle-ci, un écrou 19 au travers duquel est vissée la vis 14, la partie filetée 15 traversant l'écrou 19 s'engageant dans la partie d'extrémité tubulaire de la tige 10. Ainsi, la rondelle 18 est emprisonnée entre la tête 17 de la vis 14 et l'écrou 19. Cet ensemble à vis 14, rondelle 18 et écrou 19 assure le réglage de la précontrainte du ressort 13 à son état détendu entre la paroi 8 et la plaque 12 afin d'éviter, à cet état, tout jeu de déplacement longitudinal du ressort 13 le long de la tige 10.

La tige 10 peut traverser en partie l'orifice 16 de la paroi 8 du fourreau 7 comme on le verra ultérieurement.

La chape d'articulation 9 du fourreau 7 est reliée à l'élément de recouvrement 3 par l'intermédiaire de deux pattes parallèles rigides 20 solidaires de la face interne de l'élément de recouvrement 3 perpendiculairement à celle-ci, les deux pattes 20 constituant ainsi une chape d'articulation. Plus précisément, les deux branches 9a de la chape 9 sont disposées à faible jeu entre les deux pattes 20 au voisinage des extrémités de ces dernières et sont montées articulées à ces extrémités suivant un axe d'articulation Y1Y'1 parallèle à l'élément de recouvrement 3 ou à l'axe XX.

L'articulation de la chape 9 aux deux bras 20 est constituée par deux axes cylindriques d'articulation, non représentés, s'étendant suivant l'axe Y1Y'1, chacun engagé au travers des deux perçages coaxiaux 9b, 20b d'une branche 9a de la chape 9 et d'un bras correspondant 20, de manière qu'une telle articulation ne puisse gêner le passage d'une portion de la tige 10 au travers de l'orifice 16 et entre les deux branches 9a de la chape 9.

Les deux branches 11a de la chape 11 de la tige 10 sont disposées à faible jeu entre deux pattes rigides parallèles 21 formant elles-mêmes une chape et qui sont solidaires perpendiculairement à celle-ci d'une platine 22 en forme de plaque rigide elle-même solidaire de la partie de paroi d'assise 4 du cadre 2 perpendiculairement à celle-ci, c'est-à-dire perpendiculairement au plan du cadre 2 contenant ses quatre côtés. La platine 22 s'étend sous la partie de paroi d'assise 4 du cadre 2 et les deux pattes 21 sont solidarisées au voisinage du bord inférieur de cette platine.

La chape 11 est articulée entre les deux pattes 21 suivant un axe d'articulation Y2Y'2 parallèle à l'axe d'articulation Y1Y'1 de la chape 9 du fourreau 7. L'articulation de la chape 11 aux pattes 21 est constituée par deux axes cylindriques, non représentés, s'étendant suivant l'axe Y2Y'2 et chacun inséré dans les deux perçages coaxiaux 11b d'une branche 11a de la chape 11 et 21b de la patte correspondante 21.

Les branches 9a de la chape 9 du fourreau 7 et les branches 11b de la chape 11 de la tige 10 sont disposées symétriquement au plan médian longitudinal du vérin 6 et, en position assemblée du vérin 6 entre le cadre 2 et l'élément de recouvrement 3, le vérin 6 est disposé dans le plan médian du cadre 2 s'étendant perpendiculairement à ce dernier.

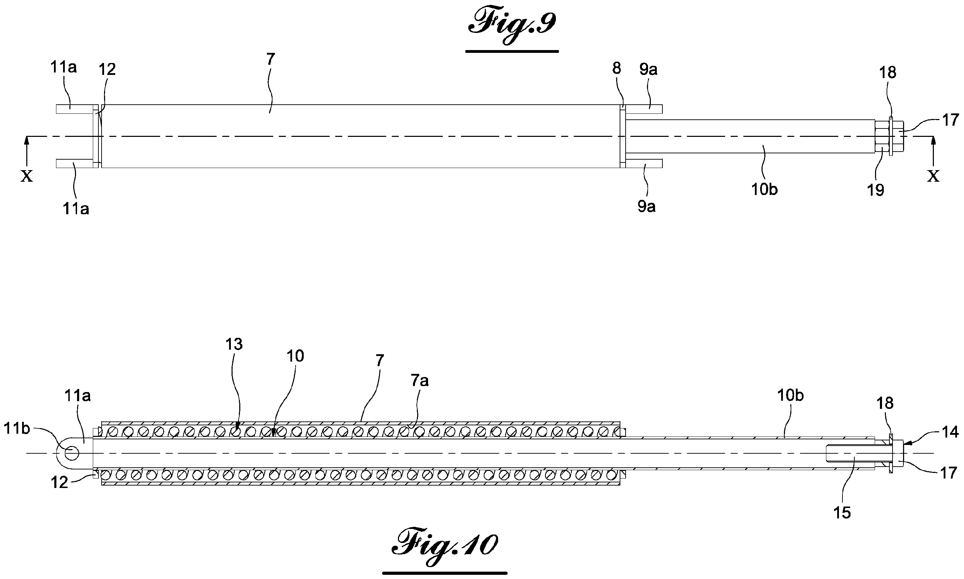

Lorsque l'élément de recouvrement 3 occupe sa position rabattue de fermeture de l'ouverture 0 du cadre 2, le ressort 13 est pratiquement complètement comprimé dans le fourreau 7 entre la paroi d'extrémité 8 de ce fourreau et la plaque 12 de la tige 10 qui se trouve au voisinage de l'extrémité du fourreau 7 opposée à la plaque d'extrémité 8 comme cela ressort notamment des figures 2 et 10. La figure 2 montre également qu'une portion de longueur 10b de la tige 10 fait saillie du fourreau 7 au travers de l'orifice 16 de celui-ci et entre les deux branches 9a de la chape 9 avec l'extrémité 10b comportant l'ensemble à vis 14, rondelle 18 et écrou 19 situé en-dessous de l'élément de recouvrement 3 au voisinage de son bord opposé à l'axe d'articulation XX'. Cette figure montre également que le vérin 6, situé en grande partie sous le cadre 2, est incliné par rapport à l'horizontale suivant un angle α relativement faible, par exemple d'environ 15°.

Lorsqu'un opérateur souhaite basculer l'élément de recouvrement de sa position rabattue de fermeture de l'ouverture 0 du cadre 2 à sa position dressée d'ouverture du cadre 2, il actionne tout d'abord le verrou de verrouillage de l'élément de recouvrement au cadre 2 pour le déverrouiller.

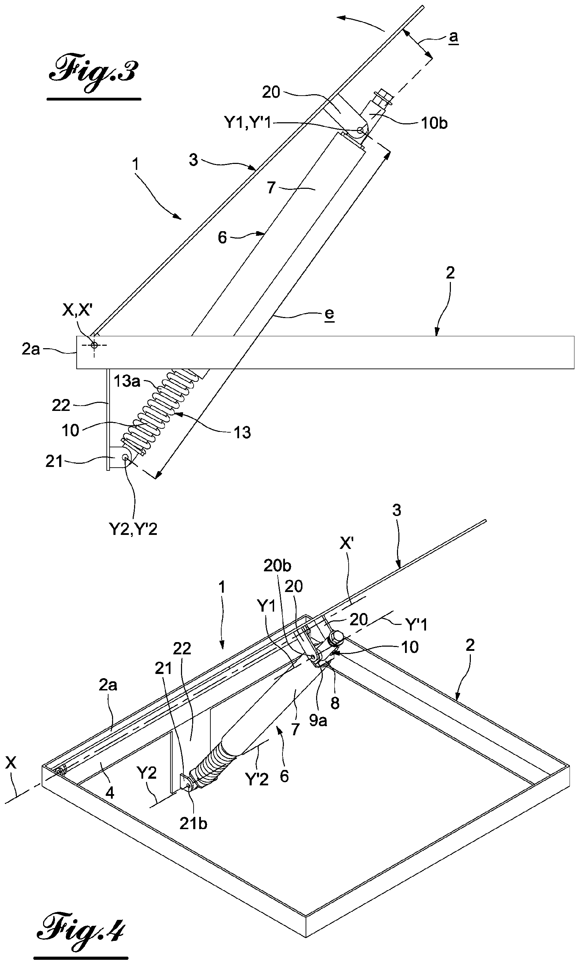

Ensuite, il introduit dans les perçages 5 de l'élément de recouvrement 3 le crochet d'extrémité d'une barre, pour soulever cet élément et le ressort 13 exerce alors, en commençant à se détendre, un effort suivant la direction longitudinale du vérin 6 à partir de la chape fixe d'articulation à bras 21 de la platine 22 permettant d'assister l'opérateur à l'ouverture de l'élément de recouvrement 3. Au fur et à mesure que l'opérateur fait pivoter l'élément de recouvrement 3 autour de l'axe XX' vers sa position dressée d'ouverture, le ressort 13 se détend continuellement pour provoquer le coulissement du fourreau 7 guidé par la tige 10 pour exercer une composante de force perpendiculaire à l'élément de recouvrement 3 permettant d'assister le pivotement de l'élément de recouvrement 3 autour de l'axe X-X'. La figure 3 représente l'élément de recouvrement 3 à une position intermédiaire de basculement vers sa position dressée d'ouverture et montre que le vérin 6 pivote autour de l'axe Y2Y'2 et que pendant ce pivotement, la portion 10b du tube de guidage 10, de par le coulissement du fourreau 7, retourne à l'intérieur de ce dernier avec sa portion 10a faisant saillie hors du fourreau 7 avec la portion correspondante 13a du ressort 13 dont les spires extrêmes sont constamment maintenues en appui entre la paroi d'extrémité 8 du fourreau 7 et la paroi d'extrémité 12 de la tige 10.

La distance fixe a de l'axe Y1Y'1 par rapport à l'élément de recouvrement 3 définie par la longueur des pattes 20 et la distance fixe b de cet axe relativement à l'axe XX' déterminée par l'emplacement des pattes 20 sur l'élément de recouvrement 3, la hauteur fixe c de l'axe Y2Y'2 relativement à l'axe XX' déterminée par la hauteur de la platine 22 et la distance fixe d de l'axe Y2Y'2 relativement à l'axe XX' en direction parallèle au plan du cadre 2 ainsi que la longueur du ressort 13 à l'état détendu sont telles que le vérin 6 assiste constamment le pivotement de l'élément de recouvrement 3 de sa position de fermeture de l'ouverture 0 du cadre 2 à sa position dressée d'ouverture avec augmentation de la distance e séparant les deux axes Y2Y'2 lors de ce pivotement et résultant du déplacement du fourreau 7 guidé par la tige 10. Il est également à noter que la distance b séparant l'axe Y1Y'1 de l'axe XX' est supérieure à la moitié de la longueur de l'élément de recouvrement 3 partant de l'axe XX'. A la position dressée d'ouverture de l'élément de recouvrement 3, le ressort 13 est complètement détendu et légèrement précontraint entre la paroi d'extrémité 8 du fourreau 7 et la plaque 12 d'extrémité de la tige 10, assurant le maintien de l'élément de recouvrement 3 à cette position dressée. Le basculement de l'élément de recouvrement 3 au-delà de sa position dressée de la figure 1 est empêché par la chape 11 se trouvant en appui sur la platine 22.

La conception du vérin d'assistance 6 permet d'utiliser un ressort de très grande longueur puisqu'il s'étend de la paroi d'extrémité 8 du fourreau 7 à la paroi 12 d'extrémité de la tige 10, assurant une assistance quasiment complète à l'ouverture de l'élément de recouvrement 3.

A titre d'exemple, l'opérateur manoeuvrant l'élément de recouvrement 3 vers sa position d'ouverture, de par l'assistance du vérin à ressort 6, exercera un effort inférieur à 250 Newtons.

Le mode préféré de réalisation ci-dessus décrit du vérin d'assistance 6 permet son montage entre l'élément de recouvrement 3 et la platine 22 du cadre 2 en étant peu encombrant sous le cadre 2 lorsque l'élément de recouvrement 3 occupe sa position rabattue de fermeture de l'ouverture 0 de ce cadre. En outre, le vérin 6 est d'une conception extrêmement simple et peu coûteuse tout en étant efficace pour assurer sa fonction d'assistance sur toute l'amplitude de basculement de l'élément de recouvrement 3 en exerçant une force permettant de compenser le poids de l'élément de recouvrement 3.

De plus, le vérin à ressort 6 assure également une fonction d'amortissement lors du basculement de l'élément de recouvrement 3 de sa position dressée d'ouverture à sa position de fermeture du cadre 2.

Il est également à noter qu'après déverrouillage du verrou de l'élément de recouvrement 3 occupant sa position de fermeture du cadre 2, le ressort 13 peut être taré pour exercer un effort faisant légèrement pivoter l'élément de recouvrement 3 à une position entrouverte de son bord opposé à l'axe d'articulation XX' pour permettre à l'opérateur de saisir plus facilement l'élément de recouvrement 3 et de le faire basculer par l'assistance du vérin 6 vers sa position dressée d'ouverture.

Selon une variante de réalisation non représentée, le montage du vérin d'assistance 6 pourrait être inversé, c'est-à-dire que la chape 9 de la paroi d'extrémité 8 du fourreau 7 serait montée entre les deux bras 21 de la platine 22 et la chape 11 d'extrémité de la tige 10 serait montée articulée entre les deux bras 20 de l'élément de recouvrement 3. Dans ce cas, lorsque l'élément de recouvrement 3 occupera sa position de fermeture du cadre 2, la portion 10b de la tige 2 fera saillie obliquement selon le même angle α qu'en figure 2 au-delà de la platine 22 qui sera découpée à cet effet pour autoriser le passage de la portion 10b de cette tige. L'inconvénient d'un tel montage est qu'il est nécessaire de creuser une cheminée ou galerie souterraine de plus grande largeur pour accueillir la portion 10b de la tige 10 en position de fermeture de l'élément de recouvrement 3.

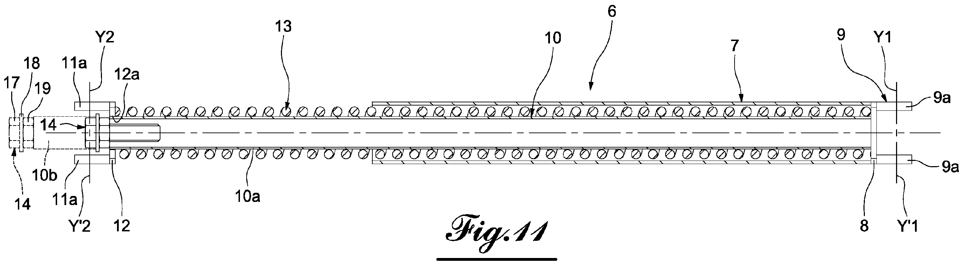

La figure 11 représente un autre mode de réalisation du vérin d'assistance 6.

Selon ce mode de réalisation, la tige de guidage 10 de coulissement du fourreau 7 a son extrémité supérieure solidaire de la plaque d'extrémité 8 du fourreau 7, par exemple par soudage, les branches 9a de la chape 9 du fourreau 7 étant montées articulées suivant l'axe Y1Y'1 entre les deux pattes 20 comme dans le premier mode de réalisation préféré.

En outre, la chape 11, qui est également montée articulée suivant l'axe Y2Y2' entre les deux bras 21 de la platine 22 comme dans le premier mode de réalisation préféré, est solidaire de la plaque 12 qui comporte un orifice central 12a permettant le passage d'une portion de la tige de guidage 10.

L'extrémité libre du tube de guidage 10 opposée à la paroi d'extrémité 8 du fourreau 7 comporte le même ensemble à vis 14, rondelle 18 et écrou 19 que celui du premier mode de réalisation préféré et il ne sera pas donc pas à nouveau détaillé sinon qu'il assure la fonction de retenue du ressort 13 à l'état détendu légèrement précontraint entre la plaque 12 et la paroi d'extrémité 8 du fourreau 7.

Lorsque l'élément de recouvrement 3 occupe sa position de fermeture du cadre 2 représentée en figure 2, le ressort 13 est pratiquement complètement comprimé entre la paroi d'extrémité 8 du fourreau 7 et la plaque 12 de la chape 11 et une portion 10b de la tige de guidage 10 fait saillie au travers de l'orifice 12a au-delà de la platine, non représentée, suivant un angle identique à l'angle α de la figure 2, comme représenté en pointillés en figure 11.

Le fonctionnement du vérin 6 pour assister l'opérateur à l'ouverture de l'élément de recouvrement 3 vers sa position dressée est semblable à celui du vérin d'assistance 6 du premier mode de réalisation préféré et ne sera donc pas à nouveau détaillé sinon que la détente du ressort au fur et à mesure du pivotement de l'élément de recouvrement 3 vers sa position dressée de l'ouverture provoque le coulissement guidé du fourreau 7 par la tige 10 pour exercer l'effort d'assistance de l'élément de recouvrement jusqu'à ce que ce dernier occupe sa position dressée correspondant à la position du vérin 6 telle que représentée en trait fort en figure 11.

Bien entendu, la platine 22 sera découpée à sa partie inférieure pour permettre le passage de la portion de tige 10b en position de fermeture de l'élément de recouvrement 3 dans le cadre 2.

L'inconvénient de ce second mode de réalisation est qu'il est nécessaire de réaliser une cheminée de plus grande largeur contrairement au premier mode de réalisation préféré.

Diverses variantes de réalisation peuvent être apportées sans sortir du champ de la présente invention.

Ainsi, il est possible de prévoir deux vérins latéraux d'assistance 6, chacun identique de préférence à celui du premier mode de réalisation.

En outre, le cadre 2 peut avoir une autre forme que rectangulaire, par exemple circulaire.

Le vérin d'assistance de l'invention ci-dessus décrit autorise ainsi l'autorisation d'un ressort de très grande longueur ce qui permet d'obtenir une très grande amplitude d'assistance du vérin à l'ouverture de l'élément de recouvrement auquel il est associé. En outre, le vérin d'assistance de l'invention est d'une structure extrêmement simple rendant sa fabrication et son montage plus rapide et est moins onéreux que les vérins à gaz et les vérins à double ressort utilisés jusqu'à maintenant.

## Revendications

1. Equipement de voirie comprenant un cadre (2) destiné à être solidaire du sol ou d'une chaussée et un élément de recouvrement (3), tel qu'une trappe, un tampon ou un couvercle, monté pivotant relativement à un bord (2a) du cadre (2) entre une position rabattue de fermeture du cadre (2) et une position dressée d'ouverture de ce cadre (2), et un dispositif d'assistance à l'ouverture de l'élément de recouvrement (3) et qui comprend au moins un vérin à ressort (6) relié de manière articulée par ses extrémités respectivement à l'élément de recouvrement (3) et au bord (2a) du cadre (2), le vérin (6) comprenant un fourreau
(7) dont une paroi d'extrémité (8) comporte une chape externe (9) reliée de manière articulée à l'élément de recouvrement (3) ou au bord (2a) du cadre (2), une tige de guidage (10) logée dans le fourreau (7) et reliée à son extrémité opposée à la paroi d'extrémité (8) du fourreau (7) au bord (2a) du cadre (2) ou à l'élément de recouvrement (3) **caractérisé en ce que** la tige de guidage (10) est reliée au bord (2a) du cadre ou à l'élément de recouvrement par une chape d'articulation (11), et **en ce que** le vérin (6) comprend un
ressort (13) logé dans le fourreau (7) en entourant la tige de guidage (10) et étant d'une part précontraint à l'état détendu tout le long de la tige de guidage (10) entre la paroi d'extrémité (8) du fourreau (7) et la chape (11) de la tige de guidage (10), dont une portion de longueur (10a) fait saillie du fourreau (7), lorsque l'élément de recouvrement (3) occupe sa position dressée d'ouverture à laquelle l'élément de recouvrement (3) est maintenu par le ressort précontraint (13) et d'autre part comprimé dans le fourreau (7) entre la paroi d'extrémité (8) du fourreau (7) et la chape (11) de la tige de guidage (10) lorsque l'élément de recouvrement (3) occupe sa position rabattue de fermeture, et un moyen (14) solidaire de l'une des extrémités de la tige de guidage (10) pour retenir le ressort (13) précontraint à l'état détendu, et **en ce que**, lors de l'ouverture assistée de l'élément de recouvrement (3) par le vérin à ressort (6), le ressort comprimé (13) se détend pour provoquer le coulissement guidé du fourreau (7) par la tige de guidage (10).

2. Equipement de voirie selon la revendication 1, **caractérisé en ce que** la chape d'articulation (11) est solidaire de l'extrémité de la tige de guidage (10) et la paroi d'extrémité (8) du fourreau (7) comporte un orifice (16) de passage de la tige de guidage (10) lors du pivotement de l'élément de recouvrement (3) entre ses positions rabattue de fermeture et dressée d'ouverture, **en ce qu'**en position rabattue de fermeture de l'élément de recouvrement (3), la tige de guidage (10) fait saillie du fourreau (7) au travers de l'orifice (16) sur une portion (10b) de sa longueur et **en ce qu'**en position dressée d'ouverture de l'élément de recouvrement, le moyen (14) de retenue du ressort (13) solidaire de l'extrémité de la tige de guidage (10) est en appui sur la paroi d'extrémité (8) du fourreau (7).

3. Equipement de voirie selon la revendication 2, **caractérisé en ce que** le moyen de retenue du ressort (13) comprend une vis (14), un écrou (19) solidaire de l'extrémité de la tige de guidage (10) et dans lequel est ancrée la vis (14), et une rondelle (18) interposée entre la tête de vis (17) et l'écrou (19) et venant en appui sur la paroi d'extrémité (8) du fourreau (7) en position dressée de l'élément de recouvrement (3).

4. Equipement de voirie selon l'une des revendications précédentes, **caractérisé en ce que** le ressort (13) est monté concentriquement à la tige de guidage (10) et au fourreau (7) en étant en contact avec la face interne périphérique (7a) du fourreau (7).

5. Equipement de voirie selon l'une des revendications précédentes, **caractérisé en ce que** l'axe d'articulation (Y1Y'1) de la chape (9) du fourreau (7) à l'élément de recouvrement (3) et l'axe d'articulation (Y2Y'2) de la chape (11) de la tige de guidage (10) au bord (2a) du cadre (2) sont parallèles à l'axe d'articulation (XX')de l'élément de recouvrement, l'axe d'articulation (Y2Y'2) est situé à une distance fixe en-dessous de l'axe d'articulation (XX') et la distance séparant les deux axes d'articulation (Y1Y'1) et (Y2Y'2) augmente au fur et à mesure que l'élément de recouvrement (3) pivote de sa position rabattue de fermeture à sa position dressée d'ouverture.

6. Equipement de voirie selon l'une des revendications précédentes, **caractérisé en ce que** la chape d'articulation (9) du fourreau (7) est reliée articulée à l'élément de recouvrement (3) par l'intermédiaire d'une autre chape (20) solidaire perpendiculairement de la face interne de l'élément de recouvrement (3) et la chape d'articulation (11) de la tige de guidage (10) est reliée articulée au bord (2a) du cadre (2) par l'intermédiaire d'une autre chape (21) solidaire perpendiculairement d'une platine (22) elle-même solidaire du bord (2a) du cadre (2) en s'étendant sous le cadre (2) perpendiculairement au plan de ce cadre.

7. Equipement de voirie selon la revendication 6 lorsque considérée en combinaison avec la revendication 2, **caractérisé en ce qu'**en position rabattue de fermeture de l'élément de recouvrement (3), la portion de longueur (10a) de la tige de guidage (10) fait saillie du fourreau (7) sous l'élément de recouvrement (3).

8. Equipement de voirie selon l'une des revendications précédentes, **caractérisé en ce que** la chape d'articulation (9) et la paroi d'extrémité (8) du fourreau (7) sont réalisées en une seule pièce soudée au fourreau (7) et la chape d'articulation (11) de la tige de guidage (10) est fixée par soudage à l'extrémité de celle-ci.

9. Equipement de voirie selon l'une des revendications précédentes, **caractérisé en ce que** le vérin à ressort (6) s'étend sensiblement dans le plan médian du cadre (2) perpendiculaire à ce dernier.

10. Equipement de voirie selon l'une des revendications précédentes, **caractérisé en ce que** le cadre (2) est rectangulaire et l'élément de recouvrement (3) s'inscrit dans le cadre (2) à sa position rabattue de fermeture.

## Patentansprüche

1. Straßenbaueinrichtung, enthaltend einen Rahmen (2), der dazu bestimmt ist, fest mit dem Boden bzw. einer Fahrbahn verbunden zu werden, und ein Abdeckelement (3), wie etwa eine Klappe, einen Stopfen bzw. einen Deckel, die bzw. der relativ zu einem Rand (2a) des Rahmens (2) zwischen einer umgeklappten Schließposition zum Verschließen des Rahmens (2) und einer aufgestellten Öffnungsposition zum Öffnen dieses Rahmens (2) verschwenkbar gelagert ist, und eine Öffnungsunterstützungsvorrichtung zum Unterstützen des Öffnens des Abdeckelements (3), die zumindest einen Federkraftzylinder (6) aufweist, der mit seinen Enden an das Abdeckelement (3) bzw. an den Rand (2a) des Rahmens (2) angelenkt ist, wobei der Kraftzylinder (6) eine Hülse (7) aufweist, deren Endwand (8) eine äußere Gelenkgabel (9) aufweist, die gelenkig mit dem Abdeckelement (3) bzw. dem Rand (2a) des Rahmens (2) verbunden ist, sowie eine Führungsstange (10), die in der Hülse (7) aufgenommen und an ihrem der Endwand (8) der Hülse (7) entgegengesetzten Ende mit dem Rand (2a) des Rahmens (2) bzw. mit dem Abdeckelement (3) verbunden ist,
**dadurch gekennzeichnet, dass** die Führungsstange (10) mit dem Rand (2a) des Rahmens bzw. mit dem Abdeckelement über eine Gelenkgabel (11) verbunden ist und dass der Kraftzylinder (6) eine Feder (13) enthält, die in der Hülse (7) aufgenommen ist und dabei die Führungsstange (10) umgibt und einerseits im entspannten Zustand entlang der gesamten Führungstange (10) zwischen der Endwand (8) der Hülse (7) und der Gelenkgabel (11) der Führungsstange (10) vorgespannt ist, von der ein Längenabschnitt (10a) von der Hülse (7) vorspringt, wenn das Abdeckelement (3) seine aufgestellte Öffnungsposition einnimmt, in welcher das Abdeckelement (3) von der vorgespannten Feder (13) gehalten wird, und andererseits in der Hülse (7) zwischen der Endwand (8) der Hülse (7) und der Gelenkgabel (11) der Führungsstange (10) zusammengedrückt wird, wenn das Abdeckelement (3) seine umgeklappte Schließposition einnimmt, sowie ein fest mit einem der Enden der Führungsstange (10) verbundenes Haltemittel (14) zum Festhalten der im entspannten Zustand vorgespannten Feder (13), und dass beim von dem Federkraftzylinder (6) unterstützten Öffnen des Abdeckelements (3) die zusammengedrückte Feder (13) sich entspannt, um die von der Führungsstange (10) geführte Gleitbewegung der Hülse (7) hervorzurufen.

2. Straßenbaueinrichtung nach Anspruch 1, **dadurch gekennzeichnet, dass** die Gelenkgabel (11) fest mit dem Ende der Führungsstange (10) verbunden ist und die Endwand (8) der Hülse (7) eine Öffnung (16) für den Durchtritt der Führungsstange (10) beim Verschwenken des Abdeckelements (3) zwischen seiner umgeklappten Schließposition und seiner aufgestellten Öffnungsposition aufweist, dass in der umgeklappten Schließposition des Abdeckelements (3) die Führungsstange (10) aus der Hülse (7) durch die Öffnung (16) hindurch über einen Abschnitt (10b) ihrer Länge vorspringt und dass in der aufgestellten Öffnungsposition des Abdeckelements das Haltemittel (14) zum Festhalten der mit dem Ende der Führungsstange (10) verbundenen Feder (13) in Anlage an der Endwand (8) der Hülse (7) ist.

3. Straßenbaueinrichtung nach Anspruch 2, **dadurch gekennzeichnet, dass** das Haltemittel zum Festhalten der Feder (13) eine Schraube (14), eine fest mit dem Ende der Führungsstange (10) verbundene Mutter (19), in welcher die Schraube (14) verankert ist, und eine Unterlegscheibe (18) enthält, die zwischen Schraubenkopf (17) und Mutter (19) eingefügt ist und in Anlage an die Endwand (8) der Hülse (7) in aufgestellter Position des Abdeckelements (3) gelangt.

4. Straßenbaueinrichtung nach einem der vorangehenden Ansprüche, **dadurch gekennzeichnet, dass** die Feder (13) konzentrisch zur Führungsstange (10) und zur Hülse (7) gelagert ist und dabei in Kontakt mit der inneren Umfangsfläche (7a) der Hülse (7) steht.

5. Straßenbaueinrichtung nach einem der vorangehenden Ansprüche, **dadurch gekennzeichnet, dass** die Anlenkachse (Y1Y'1) der Gelenkgabel (9) der Hülse (7) zum Anlenken an das Abdeckelement (3) und die Anlenkachse (Y2Y'2) der Gelenkgabel (11) der Führungsstange (10) zum Anlenken an den Rand (2a) des Rahmens (2) parallel zur Anlenkachse (XX') des Abdeckelements verlaufen, wobei die Anlenkachse (Y2Y'2) in einem festen Abstand unter der Anlenkachse (XX') liegt und der die beiden Anlenkachsen (Y1Y'1) und (Y2Y'2) trennende Abstand in dem Maße zunimmt, wie das Abdeckelement (3) sich aus seiner umgeklappten Schließposition in seine aufgestellte Öffnungsposition verschwenkt.

6. Straßenbaueinrichtung nach einem der vorangehenden Ansprüche, **dadurch gekennzeichnet, dass** die Anlenkachse (9) der Hülse (7) gelenkig mit dem Abdeckelement (3) über eine weitere Gelenkgabel (20) verbunden ist, die senkrecht fest mit der Innenfläche des Abdeckelements (3) verbunden ist, und die Gelenkgabel (11) der Führungsstange (10) gelenkig mit dem Rand (2a) des Rahmens (2) über eine weitere Gelenkgabel (21) verbunden ist, die senkrecht fest mit einer Platte (22) verbunden ist, die ihrerseits fest mit dem Rand (2a) des Rahmens (2) verbunden ist und sich dabei unter dem Rahmen (2) senkrecht zur Ebene dieses Rahmens erstreckt.

7. Straßenbaueinrichtung nach Anspruch 6 in Kombination mit Anspruch 2, **dadurch gekennzeichnet, dass** in der umgeklappten Schließposition des Abdeckelements (3) der Längenabschnitt (10a) der Führungsstange (10) von der Hülse (7) unter dem Abdeckelement (3) vorspringt.

8. Straßenbaueinrichtung nach einem der vorangehenden Ansprüche, **dadurch gekennzeichnet, dass** die Gelenkgabel (9) und die Endwand (8) der Hülse (7) aus einem Stück hergestellt sind, das mit der Hülse (7) verschweißt ist, und die Gelenkgabel (11) der Führungsstange (10) an das Ende derselben festgeschweißt ist.

9. Straßenbaueinrichtung nach einem der vorangehenden Ansprüche, **dadurch gekennzeichnet, dass** der Federkraftzylinder (6) sich im Wesentlichen in der Mittelebene des Rahmens (2) senkrecht zu diesem erstreckt.

10. Straßenbaueinrichtung nach einem der vorangehenden Ansprüche, **dadurch gekennzeichnet, dass** der Rahmen (2) rechteckförmig ist und das Abdeckelement (3) sich in den Rahmen (2) in seiner umgeklappten Schließposition einfügt.

## Claims

1. Roadway equipment comprising a frame (2) adapted to be attached to the ground or to a roadway and a covering member (3), such as a hatch, a plug or a lid, pivotally mounted relatively to an edge (2a) of the frame (2) mounted between a lowered closing position of the frame (2) and a raised opening position of that frame (2), and a device for assisting the opening of the covering member (3) and which comprises at least a spring actuator (6) hingedly linked by its ends respectively to the covering member (3) and to the edge (2a) of the frame (2), the actuator (6) comprising a sleeve (7), of which an end wall (8) comprises an external clevis (9) hingedly linked to the covering member (3) or the edge (2a) of the frame (2), a guide rod (10) accommodated in the sleeve (7) and linked at its opposite end to the end wall (8) of the sleeve (7) to the edge (2a) of the frame (2) or to the covering member (3) **characterized in that** the guide rod (10) is linked to the edge (2a) of the frame or to the covering member by a hinging clevis (11), and **in that** the actuator (6) comprises a spring (13) accommodated in the sleeve (7) while surrounding the guide rod (10) and being pre-stressed in a relaxed state all along the guide rod (10) between the end wall (8) of the sleeve (7) and the clevis (11) of the guide rod (10), a portion of the length (10a) of which protrudes from the sleeve (7), when the covering member (3) occupies its raised opening position in which the covering member (3) is held by the pre-stressed spring (13), and said spring (13) being compressed in the sleeve (7) between the end wall (8) of the sleeve (7) and the clevis (11) of the guide rod (10) when the covering member (3) occupies its lowered closing position, and a means (14) attached to one of the ends of the guide rod (10) for retaining the spring (13) pre-stressed in the relaxed state, and **in that**, during the assisted opening of the covering member (3) by the spring actuator (6), the compressed spring (13) relaxes in order to cause guided sliding of the sleeve (7) by the guide rod (10).

2. Roadway equipment according to claim 1, **characterized in that** the hinging clevis (11) is attached to the end of the guide rod (10) and the end wall (8) of the sleeve (7) comprises an aperture (16) for passage of the guide rod (10) on pivoting the covering member (3) between its lowered closing and raised opening positions, and **in that** in lowered closing position of the covering member (3), the guide rod (10) protrudes from the sleeve (7) through the aperture (16) over a portion (10b) of its length and **in that** in raised opening position of the covering member, the means (14) for retaining the spring (13) attached to the end of the guide rod (10) bears on the end wall (8) of the sleeve (7).

3. Roadway equipment according to claim 2, **characterized in that** the means for retaining the spring (13) comprises a screw (14), a nut (19) attached to the end of the guide rod (10) and in which is anchored the screw (14), and a washer (18) interposed between the screw head (17) and the nut (19) and coming to bear on the end wall (8) of the sleeve (7) in raised position of the covering member (3).

4. Roadway equipment according to one of the preceding claims, **characterized in that** the spring (13) is concentrically mounted to the guide rod (10) and to the sleeve (7) while being in contact with the internal peripheral surface (7a) of the sleeve (7).

5. Roadway equipment according to one of the preceding claims, **characterized in that** the axis (Y1Y'1) of hinging the clevis (9) of the sleeve (7) to the covering member (3) and the axis (Y2Y'2) of hinging the clevis (11) of the guide rod (10) to the edge (2a) of the frame (2) are parallel to the hinging axis (XX') of the covering member, the hinging axis (Y2Y'2) is situated at a fixed distance below the hinging axis (XX') and the distance between the two hinging axes (Y1Y'1) and (Y2Y'2) increases progressively as the covering member (3) pivots from its lowered closing position to its raised opening position.

6. Roadway equipment according to one of the preceding claims, **characterized in that** the hinging clevis (9) of the sleeve (7) is hingedly linked to the covering member (3) via another clevis (20) perpendicularly attached to the internal surface of the covering member (3) and the hinging clevis (11) of the guide rod (10) is hingedly linked to the edge (2a) of the frame (2) via another clevis (21) perpendicularly attached to a plate (22) itself attached to the edge (2a) of the frame (2) while extending under the frame (2) perpendicularly to the plane of that frame.

7. Roadway equipment according to claim 6 when considered in combination with claim 2, **characterized in that** in lowered closing position of the covering member (3), the portion of the length (10a) of the guide rod (10) protrudes from the sleeve (7) under the covering member (3).

8. Roadway equipment according to one of the preceding claims, **characterized in that** the hinging clevis (9) and the end wall (8) of the sleeve (7) are formed as a single part welded to the sleeve (7) and the hinging clevis (11) of the guide rod (10) is fastened by welding to the end of the latter.

9. Roadway equipment according to one of the preceding claims, **characterized in that** the spring actuator (6) extends substantially in the median plane of the frame (2) perpendicular to the latter.

10. Roadway equipment according to one of the preceding claims, **characterized in that** the frame (2) is rectangular and the covering member (3) is encompassed within the frame (2) in its folded closing position.
